# EUROPÄISCHE PATENTANMELDUNG

(11) **EP 3 742 035 A1**
(43) Veröffentlichungstag der Anmeldung: **25.11.2020**
(21) Anmeldenummer: 19176103.0
(22) Anmeldetag: 23.05.2019
(51) Int. Cl.: F16L 23/18, F16J 15/06

(54) **ANORDNUNG**

(71) Anmelder: Siemens Aktiengesellschaft, 80333 München (DE)
(72) Erfinder: Dings, Markus, 41379 Brüggen (DE)

(57) **Zusammenfassung**

Die Erfindung betrifft eine Anordnung (ARR) zum Ausgleich eines Versatzes (OFT) zwischen zwei Rohrflanschen (FLG) umfassend:
Anordnung (ARR) zum Ausgleich eines Versatzes (OFT) zwischen zwei Rohrflanschen (FLG) umfassend:
Anpassringe (AJR), die jeweils eine sich entlang einer Achse (X) erstreckende Ausnehmung (HOL) aufweisen, um die sich ein Ringmaterial (AMT) entlang einer Umfangsrichtung (CDR) erstreckt,
wobei mindestens zwei der Anpassringe (AJR) zwei Anlageflächen (CSF) aufweist,
wobei die Anlageflächen (CSF) zumindest entlang zu der Achse (X) konzentrischer Kreisbahnen ebene im Wesentlichen kreisringförmige Anlageflächen (CSF) aufweisen,
wobei ein Querschnitt des Ringmaterials (AMT) entlang der Umfangsrichtung (CDR) eine sich ändernde axiale Ringmaterialstärke (ART) aufweist, derart, dass zumindest zwei der Anpassringe (AJR) eine Keilform mit einen Winkelversatz (AOF) der beiden Anlageflächen (CSF) zueinander aufweisen.

Um flexibel verschiedenartige Versatzphänomene kompensieren zu können, wird vorgeschlagen, dass die Anordnung (ARR) mindestens drei Anpassringe (AJR) umfasst.

## Beschreibung

Die Erfindung betrifft eine Anordnung zum Ausgleich eines Versatzes zwischen zwei Rohrflanschen umfassend: Anpassringe, die jeweils eine sich entlang einer Achse erstreckende Ausnehmung aufweisen, um die sich ein Ringmaterial entlang einer Umfangsrichtung erstreckt, wobei mindestens zwei der Anpassringe zwei Anlageflächen aufweist, wobei die Anlageflächen zumindest entlang zu der Achse konzentrischer Kreisbahnen ebene im Wesentlichen kreisringförmige Anlageflächen aufweisen, wobei ein Querschnitt des Ringmaterials entlang der Umfangsrichtung eine sich ändernde axiale Ringmaterialstärke aufweist, derart, dass zumindest zwei der Anpassringe eine Keilform mit einen Winkelversatz der beiden Anlageflächen zueinander aufweisen.

Flansche im Sinne der Erfindung werden auch als Rohrleitungsflansche bezeichnet. Wenn vorliegend über Flansche ausgeführt wird, sind ausschließlich Rohrleitungsflansche gemeint. Flansche dienen der dichten, lösbaren Verbindung von Rohrabschnitten. Entscheidend für Dichtheit ist der mittels Flanschschrauben aufgebrachte Anpressdruck der kreisringförmigen Dichtflächen der Flansche auf eine gegebenenfalls dazwischen liegende Dichtung. Die Schrauben erstrecken sich durch Bohrungen in den Flanschen bzw. den sogenannten Flanschblättern. Flansche sind als Bestandteil der Rohrleitung in der Regel mit einem Rohrende verschweißt. Flansche können auch an Anschlussbauteilen vorgesehen sein. Verschiedene Flansche unterschiedlicher Metallwerkstoffe sind unter anderem beschrieben in: EN 1092-1, EN 1092-2, EN 1092-3, EN 1092-4.

Häufig kommt es bei der Herstellung von Rohrleitungen und der Aufstellung von angeschlossenen Maschinen zu einem räumlichen Versatz der zusammenzufügenden Flansche, zum Beispiel aufgrund von Schweißverzug.

Die Kompensation eines derartigen Versatzes erfordert herkömmlich eine aufwendige Nacharbeit oder Anpassungsarbeit vor Ort unter regelmäßig schlechten Bedingungen, insbesondere ohne geeignete Werkzeugmaschinen.

Die Erfindung hat es sich zur Aufgabe gemacht, diese Arbeiten zu vereinfachen.

Um flexibel verschiedenartige Versatzphänomene zwischen Flanschen einfach kompensieren zu können, wird zur Lösung der Aufgabe erfindungsgemäß eine Anordnung der eingangs definierten Art mit den zusätzlichen Merkmalen des kennzeichnenden Teils des Anspruchs 1 vorgeschlagen. Weiterhin wird ein Verfahren zur Montage einer derartigen Anordnung vorgeschlagen.

Die einzelnen Anpassringe sind derart ausgebildet, dass mindestens zwei der Anpassringe eine Keilform mit einem Winkelversatz der beiden Anlageflächen zueinander aufweisen. Anders ausgedrückt, weisen mindestens zwei der Anpassringe zwei im Wesentlichen kreisringförmige Anlageflächen auf, die mit einer jeweiligen Flächennormalen im Wesentlichen in Richtung der Achse weisen, wobei ein Querschnitt des Ringmaterials entlang der Umfangsrichtung eine sich ändernde axiale Ringmaterialstärke aufweist, derart, dass die beiden Flächennormalen einen Winkelversatz zueinander aufweisen.

Die zwei Anlageflächen weisen zumindest entlang zu der Achse konzentrischer Kreisbahnen ebene im Wesentlichen kreisringförmige Anlageflächen auf, damit die Anpassringe zueinander während der Montage um die Achse der Erstreckung der Ausnehmung verdreht werden können. Die Anlageflächen können demgemäß vollkommen eben ausgebildet sein oder entlang der Konzentrischen Kreisbahnen sich erstreckende Erhebungen oder Nuten aufweisen. Mittel dieser Erhebungen, Nuten oder Ausnehmungen ist eine radiale Zentrierung der Anpassringe zueinander denkbar.

Der erfindungsgemäße Einsatz von mindestens drei, bevorzugt mindestens vier Anpassringen ermöglicht eine Kompensation eines Versatzes, der eine Kombination sein kann aus einem Axialversatz, einem Winkelversatz und einem Parallelversatz oder nur eine einzelne Versatzart der aufgezählten Versatzarten.

Eine vorteilhafte Weiterbildung der Erfindung sieht vor, dass der Keilwinkel für die keilförmigen Anpassringe zwischen < 2° bis 6° (Winkel ist abhängig von der Nennweite und sollte gem. der zu korrigierenden axialen Toleranz gewählt werden) beträgt. Eine derartige Keilform ermöglicht die Kompensation der meisten auf der Baustelle auftretenden Versatzphänomene. Eine weitere vorteilhafte Weiterbildung sieht vor, dass die keilförmigen Anpassringe jeweils eine minimale axiale Ringmaterialstärke aufweisen und eine maximale axiale Ringmaterialstärke aufweisen, wobei bei einem mittleren Innendurchmesser gilt: 0,005 < ((Differenz der Ringmaterialstärken)/Innendurchmesser) < 1,025.

Eine andere vorteilhafte Weiterbildung der Erfindung sieht vor, dass zumindest einige, bevorzugt alle Anpassringe untereinander stoffschlüssig, insbesondere mittels einer Klebung, verbunden sind. Ein geeigneter Kleber hierzu ist beispielsweise Silikon. Dichtungsmaterialien können variieren von separater Dichtung mittels O-Ring bzw. Rundschnur über Gummierung der Rings bis zur Klebung wie oben beschrieben.

Besonders geeignet ist die erfindungsgemäße Anordnung zu überbrückender Ausfüllung eines Versatzes zwischen zwei Flanschen, die sich mit einer Flanschdichtfläche im Wesentlichen gegenüberstehen. Insbesondere kann es bei dem Versatz zwischen den Versatzdichtflächen zueinander sich um einen Winkelversatz zwischen 0,05° bis 8° (abhängig von der Nennweite der Flansche bzw. den zul. Toneranzen der Rohrleitungen) handeln. Ein Axialabstand zwischen den Flanschen bzw. den Flanschdichtflächen kann größer als 1mm sein. Bevorzugt handelt es sich um vier Anpassringe zwischen den beiden Flanschdichtflächen, es können aber auch nur drei Anpassringe je nach Axialabstand und Winkelversatz benutzt werden. Zusätzlich oder statt des Winkelversatzes kann der Versatz zwischen den beiden Flanschdichtflächen auch als Parallelversatz ausgebildet sein. Die Anpassringe sind hierbei derart um die Achse gegeneinander verdreht, dass die Anpassringe den Versatz zwischen den Flanschdichtflächen ausfüllen bzw. kompensieren.

Die Erfindung sieht außerdem ein Verfahren zum Ausgleich eines Versatzes zwischen zwei Rohrflanschen, umfassend Flanschdichtflächen, vor, mittels einer Anordnung nach mindestens einem der Vorrichtungsansprüche.

Das Verfahren sieht hierzu die folgenden Schritte vor:
a) Ausrichtung der Rohrflansche mit zwischen den Flanschdichtflächen angeordneten mindestens drei Anpassringen,
b) Verdrehen der Anpassringe um die Achse zueinander in eine Fügeposition derart, dass die jeweils direkt den Flanschdichtflächen gegenüberliegenden Anlageflächen der Anpassringe zu der jeweils gegenüberliegenden Flanschdichtfläche im Wesentlichen parallel ausgerichtet sind und die jeweils der Flanschdichtflächen benachbart angeordneten Anpassringe mit der sich entlang der Achse erstreckende Ausnehmung jeweils im Wesentlichen konzentrisch zu dem benachbarten Rohrflansch angeordnet ist,
c) Stoffschlüssiges Zusammenfügen der Anpassringe in der Fügeposition oder mittels separater Dichtung und formschlüssiger Markierung mittels z.B. Körnung,
d) Fertigmontage der zwei Rohrflansche zu einer Flanschverbindung unter Zwischenanordnung der Anpassringe zwischen den beiden Flanschdichtflächen.

Eine vorteilhafte Weiterbildung des erfindungsgemäßen Verfahrens sieht außerdem vor, dass nach dem Verdrehen und vor dem stoffschlüssigen Zusammenfügen der folgende Schritt erfolgt:
b1) Überprüfung der Spannungsfreiheit der Anordnung mit den Anpassringen.

Weiterhin kann folgender zusätzlicher Schritt erfolgen:
b2) Markierung der relativen Umfangsposition der Anpassringe zueinander in der Fügeposition.

Vorteilhaft kann außerdem noch der weitere Schritt erfolgen:
b3) Entnahme der Anpassringe aus der Anordnung zwischen den Flanschdichtflächen.

Im Folgenden ist die Erfindung anhand spezieller Ausführungsbeispiele unter Bezugnahme auf Zeichnungen näher erläutert.

Es zeigen:
- Figur 1: eine schematische dreidimensionale Darstellung eines Anpassrings nach der Erfindung,
- Figuren 2 - 4: jeweils eine schematische zweidimensionale Darstellung einer seitlichen Sicht auf die verschiedenen Konfigurationen der Anpassringe zwischen zwei sich gegenüberstehenden Flanschen,
- Figur 5: ein schematisches Flussdiagramm zur Illustration des erfindungsgemäßen Verfahrens.

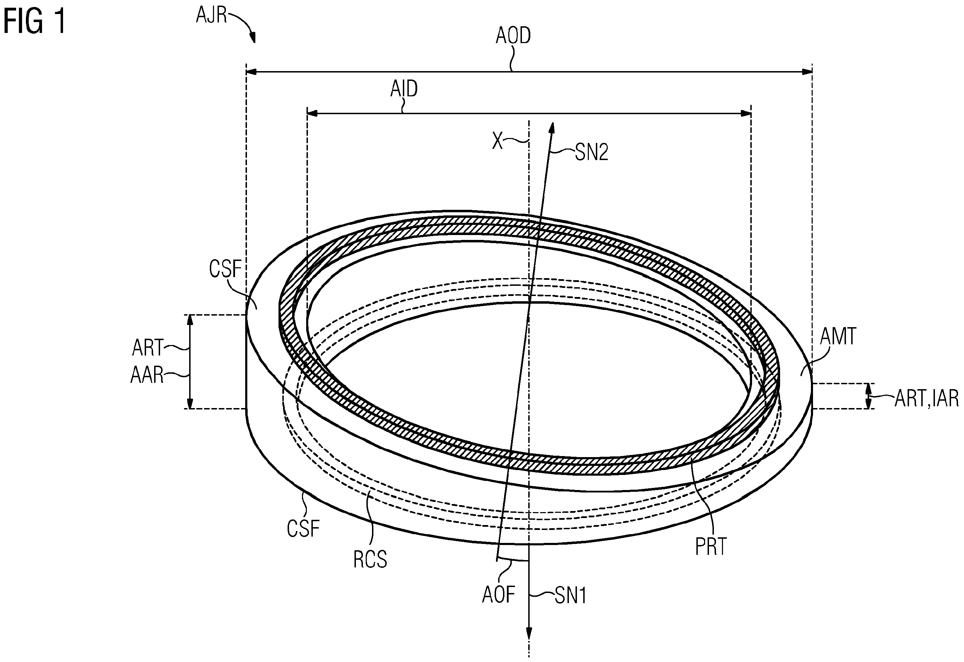

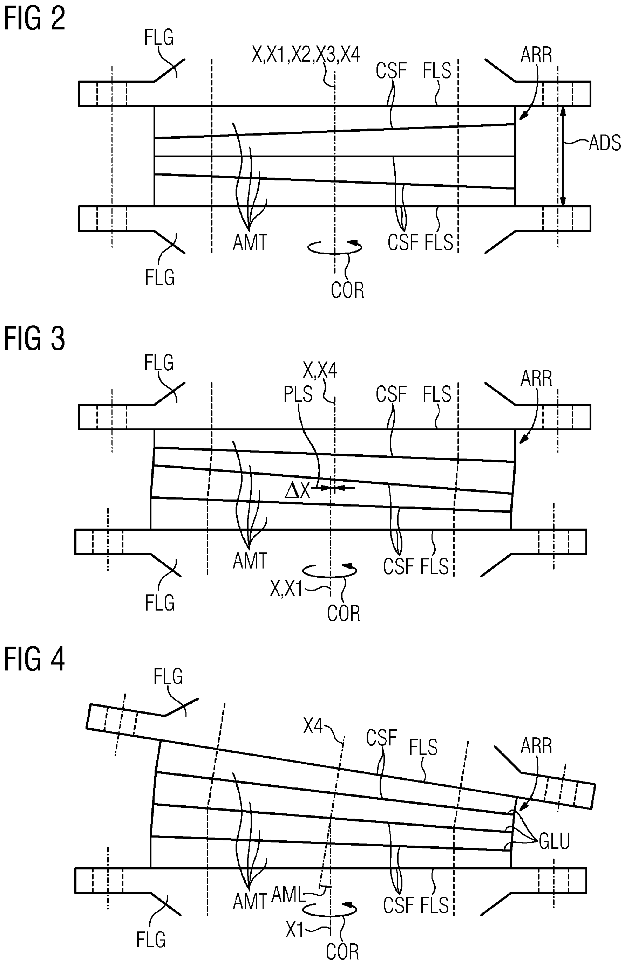

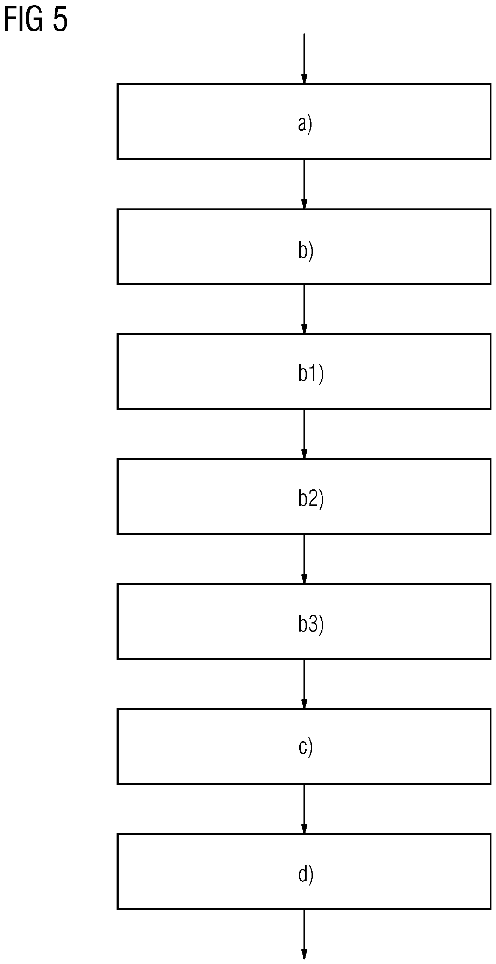

Figur 1 zeigt eine schematische dreidimensionale Darstellung eines Anpassrings AJR. Die Figuren 2 - 4 zeigen jeweils eine seitliche schematische Darstellung einer Anordnung ARR umfassend jeweils vier Anpassringe AJR zwischen jeweils zwei mit einer Flanschdichtfläche FLS im Wesentlichen sich gegenüberstehenden Flanschen FLG. Figur 5 zeigt ein schematisches Ablaufdiagramm eines Verfahrens zur Montage einer erfindungsgemäßen Anordnung ARR.

Der in Figur 1 dargestellte Anpassring AJR ist zum Ausgleich eines Versatzes OFT zwischen zwei Rohrflanschen FLG, wie in den Figuren 2 - 4 dargestellt, vorgesehen. Der Anpassring AJR hat eine sich entlang einer Achse X erstreckende Ausnehmung HOL, um die sich ein Ringmaterial AMT entlang einer Umfangsrichtung CDR erstreckt. Beidseitig axial-stirnseitig weist der Anpassring AJR zwei Anlageflächen CSF auf. Die Anlageflächen CSF sind zumindest entlang zu der Achse X konzentrischer Kreisbahnen als Ebene und im Wesentlichen kreisringförmige Anlageflächen CSF ausgebildet. Ein Querschnitt des Ringmaterials AMT entlang der Umfangsrichtung CDR weist eine sich ändernde axiale Ringmaterialstärke ART auf. Dadurch ist der Anpassring AJR keilförmig ausgebildet und die beiden Anlagenflächen CSF sind nicht zueinander parallel, sondern weisen einen Winkelversatz AOF auf. Zu Verdeutlichung sind in der Figur 1 auch für die jeweiligen Anlageflächen CSF Flächennormalen SN1, SN2 eingezeichnet, die im Wesentlichen in Richtung der Achse auf der einen Seite weisen (die erste Flächennormale SN1 ist parallel zur Achse X), wobei die zweite Flächennormale SN2 einen Winkelversatz AOF zu der ersten Flächennormalen SN1 bzw. zur Achse X aufweist. Hier optional dargestellt, weist der Anpassring AJR an der nach oben weisenden Anlagefläche CSF einen sich kreisringförmig auf der Anlagefläche erstreckenden Vorsprung PRT auf, der mit einem korrespondieren kreisringförmigen Ausschnitt RCS eines benachbarten Anpassrings AJR (ist hier mittels gestrichelter Linien als verdeckte Kontur und optional in Figur 1 dargestellt) in Eingriff gebracht werden kann, so dass ein radialer Relativersatz zwischen zwei benachbarten Anpassringen nicht möglich ist. Diese Relativversatzblockade ist nur optional und auch nur für Anpassringe AJR vorgesehen, die nicht mit der entsprechenden Anlagefläche CSF mit einer Flanschdichtungsfläche FLS in Kontakt treten. Alternativ oder zusätzlich zu dieser formschlüssigen Bewegungseinschränkung relativ zwischen zwei Anpassringen AJR ist eine stoffschlüssige Verbindung zwischen zwei benachbarten Anpassringen AJR vorgesehen, in der Art einer Klebung GLU, z.B. mittels Silikons. Zwischen den einzelnen Anpassringen AJR und/oder zwischen den Anpassringen AJR und den Flanschdichtungsflächen FLS können Dichtungen oder Stoffe zum Abdichten je nach Anforderung vorgesehen sein. Der Keilwinkel AOS bzw. der Winkelversatz AOS zwischen den beiden Flächennormalen SN1, SN2 beträgt für mindestens einige keilförmige Anpassringe AJR zwischen 2° bis 6°. Bevorzugt sind alle keilförmigen Anpassringe AJR der Anordnung ARR mit identischen Keilwinkeln ausgebildet.

Die keilförmigen Anpassringe AJR weisen jeweils eine minimale axiale Ringmaterialstärke IAR auf und eine maximale axiale Ringmaterialstärke AAR. Daneben weisen die keilförmigen Anpassringe AJR einen mittleren Innendurchmesser AID auf und einen mittleren Außendurchmesser AOD. Für einem Zusammenhang zwischen den Ringmaterialstärken IAR, AAR und dem mittleren Innendurchmesser AID gilt: 0,005 < (AAR - IAR) / AID < < 1,025.

Für das Verhältnis des mittleren Außendurchmessers AOD und des mittleren Innendurchmessers AID gilt weiterhin:
1,002 < AOD/AID < 1,2 abhängig von dem jeweiligen Flanschdichtflächenverhältnis.

In der Figur 2 ist der Fall dargestellt, dass die beiden Flanschdichtflächen FLS der beiden sich gegenüberstehenden Flansche FLG lediglich einen Axialabstand ADS zueinander aufweisen. Dementsprechend sind die keilförmigen Anpassringe AJR derart zueinander verdreht, dass der jeweilige Keilwinkel AOF von den benachbarten Anpassringen AJR kompensiert wird. Dementsprechend fallen sämtliche Erstreckungsachsen X1, X2, X3, X4 der beteiligten Anpassringen AJR mit der zentralen Achse X zusammen.

Figur 3 zeigt einen Parallelversatz PLS der beiden sich gegenüberliegenden Flansche FLG bzw. der Flanschdichtungsflächen FLS. Der Parallelversatz PLS wird mittels der Anpassringe AJR dadurch ausgeglichen, dass die vier Anpassringen jeweils in Zweier-Gruppen mit identischer Umfangsposition der maximalen axialen Ringstärke AAR ausgerichtet sind. Auf diese Weise wird ein Winkelversatz der endseitigen Anlageflächen der Zweier-Gruppe verursacht. Eine zweite Zweier-Gruppe mit ebenfalls identischer Umfangsausrichtung der beiden Anpassringe AJR ist zu der ersten Gruppe mit entgegengesetzter Ausrichtung in Umfangsrichtung angeordnet. Dadurch wird der Winkelversatzes der insgesamt vier Anpassringe AJR kompensiert. Es verbleibt lediglich ein Parallelversatz PLS, der den Kompensationsanforderungen der Anordnung ARR entspricht.

Figur 4 zeigt eine Situation, bei der die sich gegenüberliegenden Flansche FLG neben dem Axialversatz ADS auch einen Winkelversatz AOF aufweisen. Der Winkelversatz wird mittels der vier Anpassringe AJR ausgeglichen, indem die Umfangsposition der vier Anpassringen AJR identisch ist, so dass die Umfangposition mit der maximalen axialen Ringstärke ART jeweils übereinstimmen. Diese drei Basisfälle werden in realen Montagesituation miteinander derart überlagert, dass die Kombination aus Axialversatz bzw. Axialabstand ADS, Winkelversatz AOF und Parallelversatz PLS in den Grenzen der Keilform der Anpassringe jeweils ausgeglichen werden mittels Drehung der einzelnen Anpassringe AJR, bis die Versatzsituation ausgeglichen ist.

Figur 5 zeigt ein Flussdiagramm, dass das Verfahren zum Ausgleich eines Versatzes OFT zwischen zwei Rohrflanschen FLG wiedergibt.

In einem ersten Schritt a) erfolgt eine Ausrichtung der Rohrflansche FLG mit zwischen den Flanschdichtflächen FLS angeordneten mindestens drei Anpassringen AJR, bevorzugt mit vier Anpassringen AJR.

In einem zweiten Schritt b) folgt ein Verdrehen der Anpassringe AJR um die Achse X zueinander in eine Fügeposition derart, dass die jeweils direkt den Flanschdichtflächen FLS gegenüberliegenden Anlageflächen der Anpassringe AJR zu der jeweils gegenüberliegenden Flanschdichtfläche FLS im Wesentlichen parallel ausgerichtet sind und die jeweils der Flanschdichtflächen FLS benachbart angeordneten Anpassringe AJR mit der sich entlang der Achse X erstreckende Ausnehmung HOL jeweils im Wesentlichen konzentrisch zu dem benachbarten Rohrflansch FLG angeordnet ist,

In einem optionalen Unterschritt des Schritts b) - hiermit b1) bezeichnet - erfolgt die optionale Überprüfung der Spannungsfreiheit der Anordnung ARR mit den Anpassringen AJR.

In einem ebenfalls optionalen Unterschritt b2) des zweiten Schrittes erfolgt eine Markierung der relativen Umfangsposition der Anpassringe AJR zueinander in der Fügeposition.

Ein weiterer optionaler Unterschritt b3) sieht vor, dass vor dem stoffschlüssigen Zusammenfügen eine Entnahme der Anpassringe AJR aus der Anordnung zwischen den Flanschdichtflächen FLS erfolgt. Die Entnahme findet zum Zwecke des Zusammenklebens der Anpassringe AJR statt.

In dem Folgenden dritten Schritt c) erfolgt das stoffschlüssige Zusammenfügen der Anpassringe AJR in der Fügeposition.

Schließlich erfolgt in einem vierten Schritt d) die Fertigmontage der zwei Rohrflansche FLG zu einer Flanschverbindung unter Zwischenanordnung der Anpassringe AJR zwischen den beiden Flanschdichtflächen FLS.

## Patentansprüche

1. Anordnung (ARR) zum Ausgleich eines Versatzes (OFT) zwischen zwei Rohrflanschen (FLG) umfassend:
Anpassringe (AJR), die jeweils eine sich entlang einer Achse (X) erstreckende Ausnehmung (HOL) aufweisen, um die sich ein Ringmaterial (AMT) entlang einer Umfangsrichtung (CDR) erstreckt,
wobei mindestens zwei der Anpassringe (AJR) zwei Anlageflächen (CSF) aufweist,
wobei die Anlageflächen (CSF) zumindest entlang zu der Achse (X) konzentrischer Kreisbahnen ebene im Wesentlichen kreisringförmige Anlageflächen (CSF) aufweisen,
wobei ein Querschnitt des Ringmaterials (AMT) entlang der Umfangsrichtung (CDR) eine sich ändernde axiale Ringmaterialstärke (ART) aufweist, derart, dass zumindest zwei der Anpassringe (AJR) eine Keilform mit einen Winkelversatz (AOF) der beiden Anlageflächen (CSF) zueinander aufweisen,
**dadurch gekennzeichnet, dass**
die Anordnung (ARR) mindestens drei Anpassringe (AJR) umfasst.

2. Anordnung (ARR) nach Anspruch 1,
wobei der Keilwinkel (AOS) für die keilförmigen Anpassringe (AJR) zwischen 0,01° bis 6° beträgt.
Anordnung (ARR) nach Anspruch 1 oder 2,
wobei die keilförmigen Anpassringe (AJR) jeweils eine minimale axiale Ringmaterialstärke (IAR) aufweisen und
eine maximale axiale Ringmaterialstärke (AAR) aufweisen, einen mittleren Innendurchmesser (AID) aufweisen,
wobei gilt: 0,005 < (AAR - IAR) / AID < 1,025.

3. Anordnung (ARR) nach mindestens einem der vorhergehenden Ansprüche 1 bis 3,
wobei die Anpassringe (AJR) einen mittleren Außendurchmesser (AOD) und einen mittleren Innendurchmesser (AID) aufweisen,
wobei für das Verhältnis gilt:
1,002 < AOD/AID < 1,2 abhängig von der jeweiligen Flanschdichtflächenverhältnis.

4. Anordnung (ARR) nach mindestens einem der vorhergehenden Ansprüche 1 bis 4,
wobei zumindest einige, bevorzugt alle Anpassringe (AJR) untereinander stoffschlüssig, insbesondere mittels einer Klebung (GLU), verbunden sind.

5. Anordnung (ARR) nach mindestens einem der vorhergehenden Ansprüche 1 bis 5,
wobei die Anordnung zwei Flansche (FLG) umfasst,
wobei die Flansche (FLG) sich mit einer Flanschdichtfläche (FLS) im Wesentlichen gegenüberstehen,
wobei die Flanschdichtflächen (FLS) zueinander einen Winkelversatz zwischen 0,01° - 6° aufweisen,
wobei die Flansche (FLG) einen Axialabstand (ADS) aufweisen, mit ADS > 1mm,
wobei mindestens drei, bevorzugt vier, Anpassringe (AJR) zwischen den beiden Flanschdichtflächen (FLS) der beiden Flansche (FLG) angeordnet sind,
wobei die mindestens drei Anpassringe (AJR) derart zueinander um die Achse (X) verdreht angeordnet sind,
dass der Axialabstand (ADS) und der Winkelversatz (AML) von den Anpassringen (AJR) überbrückend ausgefüllt werden.

6. Anordnung (ARR) nach Anspruch 6,
wobei zusätzlich zu dem Winkelversatz (AML) oder statt des Winkelversatzes (AML) ein Parallelversatz (PLS) zwischen den beiden Flanschen (FLG) vorliegt,
wobei mittels des Verdrehens der Anpassringe (AJR) auch der Parallelversatz (PLS) von den Anpassringen (AJR) überbrückend ausgefüllt wird.

7. Verfahren zum Ausgleich eines Versatzes (OFT) zwischen zwei Rohrflanschen (FLG), umfassend Flanschdichtflächen (FLS), mittels einer Anordnung nach mindestens einem der vorhergehenden Ansprüche 1-7 umfassend die folgenden Schritte:
a) Ausrichtung der Rohrflansche (FLG) mit zwischen den Flanschdichtflächen (FLS) angeordneten mindestens drei Anpassringen (AJR),
b) Verdrehen der Anpassringe (AJR) um die Achse (X) zueinander in eine Fügeposition derart, dass die jeweils direkt den Flanschdichtflächen (FLS) gegenüberliegenden Anlageflächen der Anpassringe (AJR) zu der jeweils gegenüberliegenden Flanschdichtfläche (FLS) im Wesentlichen parallel ausgerichtet sind und die jeweils der Flanschdichtflächen (FLS) benachbart angeordneten Anpassringe (AJR) mit der sich entlang der Achse (X) erstreckende Ausnehmung (HOL) jeweils im Wesentlichen konzentrisch zu dem benachbarten Rohrflansch (FLG) angeordnet ist,
c) Stoffschlüssiges Zusammenfügen der Anpassringe (AJR) in der Fügeposition,
d) Fertigmontage der zwei Rohrflansche (FLG) zu einer Flanschverbindung unter Zwischenanordnung der Anpassringe (AJR) zwischen den beiden Flanschdichtflächen (FLS).

8. Verfahren nach Anspruch 8, wobei nach dem Verdrehen und vor dem stoffschlüssigen Zusammenfügen der folgende Schritt erfolgt:
b1) Überprüfung der Spannungsfreiheit der Anordnung (ARR) mit den Anpassringen (AJR).

9. Verfahren nach Anspruch 8, wobei nach dem Verdrehen und vor dem stoffschlüssigen Zusammenfügen der folgende Schritt erfolgt:
b2) Markierung der relativen Umfangsposition der Anpassringe (AJR) zueinander in der Fügeposition.

10. Verfahren nach Anspruch 8 oder 9, wobei nach dem Verdrehen und vor dem stoffschlüssigen Zusammenfügen der folgende Schritt erfolgt:
b3) Entnahme der Anpassringe (AJR) aus der Anordnung zwischen den Flanschdichtflächen (FLS).
